Europäisches Patentamt

European Patent Office

Office européen des brevets

(11) Publication number: 0 472 311 B1

# EUROPEAN PATENT SPECIFICATION

(45) Date of publication of patent specification: 12.07.95    (51) Int. Cl.⁶: **A01N 35/02**, C02F 1/50,
//(A01N35/02,47:44,47:02,33:08)

(21) Application number: 91307092.6

(22) Date of filing: 01.08.91

(54) **Bacterial inhibiting compositions and their use.**

(30) Priority: **13.08.90 US 566650**
**13.08.90 US 566651**
**13.08.90 US 566637**

(43) Date of publication of application:
**26.02.92 Bulletin 92/09**

(45) Publication of the grant of the patent:
**12.07.95 Bulletin 95/28**

(84) Designated Contracting States:
**AT BE DE ES FR GB IT NL SE**

(56) References cited:
**CH-A- 595 845**
**FR-A- 2 344 295**
**US-A- 4 071 628**

(73) Proprietor: **BETZ EUROPE, INC.**
**Somerton Road**
**Trevose, PA 19053 (US)**

(72) Inventor: **Whitekettle, Wilson Kurt**
**215 Hampton Hall Lane**
**Conroe,**
**Texas 77302 (US)**
Inventor: **Conlon, John Thomas**
**776 Phoenix Avenue**
**Ventura,**
**California 77302 (US)**

(74) Representative: **W.P. Thompson & Co.**
**Coopers Building,**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to bacterial inhibiting or biocidal compositions. More particularly it relates to bacterial inhibiting compositions comprising glutaraldehyde and at least one other component, the composition exhibiting synergy.

The formation of slimes by microorganisms is a problem that is encountered in many aqueous systems. For example, the problem is not only found in natural waters such as, for example, lagoons, lakes or ponds, and confined waters as in pools, but also in such industrial systems as cooling water systems, air washer systems and pulp and paper mill systems. All possess conditions which are conducive to the growth and reproduction of slime-forming micro-organisms. In both once-through and recirculating cooling systems, for example, which employ large quantities of water as a cooling medium, the formation of slime by micro-organisms is an extensive and constant problem.

Airborne organisms are readily entrained in the water from cooling towers and find this warm medium an ideal environment for growth and multiplication. Aerobic and heliotropic organisms flourish on the tower proper while other organisms colonize and grow in such areas as the tower sump and the piping and passages of the cooling system. The slime formation not only aids in the deterioration of the tower structure in the case of wooden towers, but also promotes corrosion when it deposits on metal surfaces. Slime carried through the cooling system plugs and fouls lines, valves, strainers and the like, and deposits on heat exchange surfaces. In the latter case, the impedance of heat transfer can greatly reduce the efficiency of the cooling system.

In pulp and paper mill systems, slime formed by micro-organisms is commonly encountered and causes fouling, plugging, or corrosion of the system. The slime also becomes entrained in the paper produced to cause breakouts on the paper machines, which results in work stoppages and the loss of production time. The slime is also responsible for unsightly blemishes in the final product, which result in rejects and wasted output.

The previously discussed problems have resulted in the extensive utilization of biocides in cooling water and pulp and paper mill systems. Materials which have enjoyed widespread use in such applications include chlorine, chlorinated phenols, organo-bromines, and various organo-sulphur compounds. All of these compounds are generally useful for this purpose but each is attended by a variety of impediments. For example, chlorination is limited both by its specific toxicity for slime-forming organisms at economic levels and by the tendency of chlorine to react, which results in the expenditure of the chlorine before its full biocidal function is achieved.

Other biocides are attended by odour problems and hazards with respect to storage, use or handling which limit their utility. To date, no one compound or type of compound has achieved a clearly established predominance with respect to the applications discussed. Likewise, lagoons, ponds, lakes, and even pools, either used for pleasure purposes or used for industrial purposes for the disposal and storage of industrial wastes, become, during the warm weather, besieged by slime due to microorganism growth and reproduction. In the case of industrial storage or disposal of industrial materials, the microorganisms cause additional problems which must be eliminated prior to the use of the materials or disposal of the waste

Naturally, economy is a major consideration with respect to all of these biocides. Such economic considerations attach to both the cost of the biocide and the expense of its application. The cost performance index of any biocide is derived from the basic cost of the material, its effectiveness per unit of weight, the duration of its biocidal or biostatic effect in the system treated, and the ease and frequency of its addition to the system treated. To date, none of the commercially available biocides has exhibited a prolonged biocidal effect. Instead, their effectiveness is rapidly reduced as a result of exposure to physical conditions such as, for example, temperature, association with ingredients contained by the system toward which they exhibit an affinity or substantivity, or the like, with a resultant restriction or elimination of their biocidal effectiveness, or by dilution.

As a consequence, the use of such biocides involves their continuous or frequent addition to systems to be treated and their addition to multiple points or zones in the systems to be treated. Accordingly, the cost of the biocide and the labour cost of applying it are considerable. In other instances, the difficulty of access to the zone in which slime formation is experienced precludes the effective use of a biocide. For example, if in a particular system there is no access to an area at which slime formation occurs the biocide can only be applied at a point which is upstream in the flow system. However, the physical or chemical conditions, e.g., chemical reactivity or thermal degradation, which exist between the point at which the biocide may be added to the system and the point at which its biocidal effect is desired render the effective use of a biocide impossible.

Similarly, in a system experiencing relatively slow flow, such as, for example, a paper mill, if a biocide is added at the beginning of the system, its biocidal effect may be completely dissipated before it has reached all of the points at which this effect is desired or required. As a consequence, the biocide must be added at multiple points, and even then a diminishing biocidal effect will be experienced between one point of addition to the system and the next point downstream at which the biocides may be added. In addition to the increased cost of utilizing and maintaining multiple feed points, gross ineconomies with respect to the cost of the biocide are experienced. Specifically at each point of addition, an excess of the biocide is added to the system in order to compensate for that portion of the biocide which will be expended in reacting with other constituents present in the system or experience physical changes which impair its biocidal activity.

It has now been found possible to provide a bacterial or biocidal composition which comprises, as active ingredients, glutaraldehyde and at least one additional chemical component. The at least one additional component is dodecylguanidine hydrochloride (DGH).

Glutaraldehyde is commercially available from Union Carbide Corp., under the trademarks "Ucarcide 225" or "Ucarcide 250".

The physical properties of these compounds are reported as being:

|  |  | Ucarcide 225 | Ucarcide 250 |
|---|---|---|---|
| Specific Gravity at 20°C |  | 1.062 | 1.124 |
| Vapor Pressure at 20°C |  | 17 mm. Hg | 17 mm. Hg |
| Freezing Point |  | - 7.0°C | -14.0°C |
| Solubility in Water at 20°C |  | Complete | Complete |
| Viscosity at | 0°C | 8.4 cps | 105.0 cps |
|  | 20°C | 3.4 cps | 22.1 cps |
|  | 40°C | 1.7 cps | 5.7 cps |

Use of dodecylguanidine hydrochloride is listed at 21 CFR 176.170 as being an F.D.A. acceptable antimicrobial agent for paper and paperboard use under certain conditions.

US-A- 4 725 623 (Whitekettle), which discloses the use of DGH in a biocidal composition, may be of interest.

The synergistic effects obtained by combining glutaraldehyde with DGH has not been previously disclosed.

Surprisingly, it has now been found that mixtures of glutaraldehyde with DGH is especially efficacious in controlling the growth of bacterial microbes, specifically the Klebsiella pneumoniae species. This particular species is a member of the capsulated, facultative class of bacteria and is generally present in air, water and soil. These bacteria continually contaminate open cooling systems and pulping and papermaking systems and are among the most common slime formers. The slime may be viewed as being a mass of agglomerated cells stuck together by the cementing action of the gelatinous polysaccharide or proteinaceous secretions around each cell. The slimy mass entraps other debris, restricts water flow and heat transfer, and may serve as a site for corrosion.

The fact that the Klebsiella species used in the tests is a facultative species is important as, by definition, such bacteria may thrive under either aerobic or anaerobic conditions. Accordingly, by reason of demonstrated efficacy in the growth inhibition of this particular species, one can expect similar growth inhibition attributes when other aerobic or anaerobic bacterial species are encountered. It is also expected that these compositions will exhibit similar growth inhibition attributes when fungi and algae species are encountered.

According to the present invention there is provided a method for controlling the growth of bacteria, particularly Klebsiella pneumoniae bacteria, in an aqueous system, which comprises adding to the system a composition comprising a synergistic mixture of (a) glutaraldehyde and (b) at least one additional biocidal component, the at least one additional biocidal component being dodecylguanidine hydrochloride and the weight ratio of glutaraldehyde to dodecylguanidine hydrochloride being from about 357:1 to 1:2.87. The aqueous system may comprise, for example, a cooling water system or a pulping and papermaking system.

In accordance with the present invention, the combined treatment of glutaraldehyde with DGH may be added to the desired aqueous system in need of biocidal treatment, preferably in an amount of from about 0.1 to about 200 parts of the combined treatment to one million parts (by weight) of the aqueous medium. More preferably, about 5 to about 50 parts of the combined treatment per one million parts (by weight) of the aqueous medium is added.

The combined treatments are added, for example, to cooling water systems, paper and pulp mill systems, pools, ponds, lagoons or lakes, to control the formation of bacterial microorganisms, which may be contained by, or which may become entrained in, the system to be treated. It has been found that the compositions and methods of utilization of the treatments are efficacious in controlling the facultative bacterium, Klebsiella pneumoniae, which may populate these systems. It is thought that the combined treatment compositions and methods of the present invention will also be efficacious in inhibiting and controlling all types of aerobic and anaerobic bacteria.

Surprisingly, it has been found that when the ingredients are mixed, in certain instances, the resulting mixtures possess a higher degree of bactericidal activity than that of the individual ingredients comprising the mixtures. Accordingly, it is possible to produce highly efficacious bactericides. Because of the enhanced activity of the mixtures, the total quantity of the bacterial treatments may be reduced. In addition, the high degree of bactericidal effectiveness which is provided by each of the ingredients may be exploited without use of higher concentrations of each.

The following experimental data were developed. It is to be remembered that the following examples are to be regarded solely as being illustrative, and not as restricting the scope of the invention.

Glutaraldehyde and DGH were added in varying ratios and over a wide range of concentrations to a liquid nutrient medium which was subsequently inoculated with a standard volume of a suspension of the facultative bacterium Klebsiella pneumoniae. Growth was measured by determining the amount of radioactivity accumulated by the cells when 14C-glucose was added as the sole source of carbon in the nutrient medium. The effect of the biocide chemicals, alone and in combination, is to reduce the rate and amount of 14C incorporation into the cells during incubation, as compared to controls not treated with the chemicals. Additions of the biocides, alone and in varying combinations and concentrations, were made according to the accepted "checkerboard" technique described by M. T. Kelley and J. M. Matsen, Antimicrobial Agents and Chemotherapy. 9: 440 (1976). Following a two hour incubation, the amount of radioactivity incorporated in the cells was determined by counting (14C liquid scintillation procedures) for all treated and untreated samples. The percent reduction of each treated sample was calculated from the relationship:

$$\underline{\text{Control 14C(cpm) − Treated 14C(cpm)}} \times 100 = \% \text{ reduction}$$
$$\text{Control 14C(cpm)}$$

Plotting the % reduction of 14C level against the concentration of each biocide acting alone results in a dose-response curve, from which the biocide dose necessary to achieve any given % reduction can be interpolated.

Synergism was determined by the method of calculation described by F. C. Kull, P. C. Eisman, H. D. Sylwestrowicz and R. L. Mayer, Applied Microbiology 9,538 (1961) using the relationship:

$$\frac{Q_A}{Q_a} + \frac{Q_B}{Q_b} = \text{synergism index (SI)}$$

where:

$Q_a$ = quantity of compound A, acting alone, producing an end point
$Q_b$ = quantity of compound B, acting alone, producing an end point
$Q_A$ = quantity of compound A in mixture, producing an end point
$Q_B$ = quantity of compound B in mixture, producing an end point

The end point used in the calculations is the % reduction caused by each mixture of A and B. $Q_A$ and $Q_B$ are the individual concentrations in the A/B mixture causing a given % reduction. $Q_a$ and $Q_b$ are determined by interpolation from the respective dose-response curves of A and B as those concentrations of A and B acting alone which produce the same % reduction as each specific mixture produced.

Dose-response curves for each active acting alone were determined by linear regression analysis of the dose-response data. Data were fitted to a curve represented by the equation shown with each data set. After linearizing the data, the contributions of each biocide component in the biocide mixtures to the inhibition of radioisotope uptake were determined by interpolation with the dose-response curve of the respective biocide. If, for example, quantities of $Q_A$ plus $Q_B$ are sufficient to give a 50% reduction in 14C content, $Q_a$ and $Q_b$ are those quantities of A or B acting alone, respectively, found to give 50% reduction in 14C content. A synergism index (SI) is calculated for each combination of A and B.

Where the SI is less than 1, synergism exists. Where the SI = 1, additivity exists. Where the SI is greater than 1, antagonism exists.

The data in the following tables come from treating Klebsiella pneumoniae, a common nuisance bacterial type found in industrial cooling waters and in pulping and paper making systems, with varying ratios and concentrations of glutaraldehyde and each additional biocidal component. Shown for each combination is the % reduction of 14C content (% I), the calculated SI, and the weight ratio of glutaraldehyde and each additional biocidal component.

## TABLE I
## DGH and Glutaraldehyde (GLUT)

| ppm DGH[1] | ppm GLUT[2] | Ratio DGH:GLUT | % I | SI |
|---|---|---|---|---|
| 2.5 | 0 | 100:0 | 0 | |
| 5 | 0 | 100:0 | 2 | |
| 10 | 0 | 100:0 | 34 | |
| 20 | 0 | 100:0 | 61 | |
| 40 | 0 | 100:0 | 81 | |
| 80 | 0 | 100:0 | 75 | |
| 0 | 39 | 0:100 | 4 | |
| 0 | 78 | 0:100 | 10 | |
| 0 | 313 | 0:100 | 36 | |
| 0 | 625 | 0:100 | 51 | |
| 0 | 1250 | 0:100 | 79 | |
| 0 | 2500 | 0:100 | 91 | |
| 2.5 | 2500 | 1:1000 | 90 | 0.99 |
| 5 | 2500 | 1:500 | 90 | 1.03 |
| 10 | 2500 | 1:250 | 91 | 1.07 |
| 20 | 2500 | 1:125 | 93 | 1.10 |
| 40 | 2500 | 1:62.5 | 95 | 1.24 |
| 80 | 2500 | 1:31.3 | 97 | 1.57 |
| 2.5 | 1250 | 1:500 | 78 | 0.87* |
| 5 | 1250 | 1:250 | 78 | 0.93* |
| 10 | 1250 | 1:125 | 81 | 0.92* |
| 20 | 1250 | 1:62.5 | 88 | 0.85* |
| 40 | 1250 | 1:31.3 | 95 | 0.87* |
| 80 | 1250 | 1:15.6 | 98 | 1.21 |
| 2.5 | 625 | 1:250 | 47 | 1.84 |
| 5 | 625 | 1.125 | 49 | 1.82 |
| 10 | 625 | 1:62.5 | 62 | 1.23 |
| 20 | 625 | 1:31.3 | 76 | 0.89* |
| 40 | 625 | 1:15.6 | 92 | 0.74* |
| 80 | 625 | 1:7.8 | 97 | 1.04 |

TABLE I Cont'd
DGH and Glutaraldehyde (GLUT)

| ppm DGH[1] | ppm GLUT[2] | Ratio DGH:GLUT | %I | SI |
|---|---|---|---|---|
| 2.5 | 313 | 1:125 | 47 | 1.00 |
| 5 | 313 | 1:62.5 | 48 | 1.07 |
| 10 | 313 | 1:31.3 | 52 | 1.17 |
| 20 | 313 | 1:15.6 | 62 | 1.13 |
| 40 | 313 | 1:7.8 | 90 | 0.69* |
| 80 | 313 | 1:3.9 | 97 | 0.96* |
| 2.5 | 78 | 1:31.3 | 26 | 0.86* |
| 5 | 78 | 1:15.6 | 27 | 1.09 |
| 10 | 78 | 1:7.8 | 55 | 0.61* |
| 20 | 78 | 1:3.9 | 64 | 0.79* |
| 40 | 78 | 1:1.9 | 86 | 0.67* |
| 80 | 78 | 1:0.95 | 97 | 0.90* |
| 2.5 | 39 | 1:15.6 | 17 | 0.82* |
| 5 | 39 | 1:7.8 | 16 | 1.28 |
| 10 | 39 | 1:3.9 | 51 | 0.61* |
| 20 | 39 | 1:1.9 | 67 | 0.66* |
| 40 | 39 | 1:0.95 | 86 | 0.66* |
| 80 | 39 | 1:0.48 | 97 | 0.88* |

[1] product containing 35% actives DGH
[2] product containing 25% actives GLUT

## TABLE II
### DGH and Glutaraldehyde

| ppm DGH[1] | ppm GLUT[2] | Ratio DGH:GLUT | % I | SI |
|---|---|---|---|---|
| 2.5 | 0 | 100:0 | 0 | |
| 5 | 0 | 100:0 | 0 | |
| 10 | 0 | 100:0 | 15 | |
| 20 | 0 | 100:0 | 61 | |
| 40 | 0 | 100:0 | 79 | |
| 80 | 0 | 100:0 | 68 | |
| 0 | 39 | 0:100 | 0 | |
| 0 | 78 | 0:100 | 12 | |
| 0 | 313 | 0:100 | 40 | |
| 0 | 625 | 0:100 | 66 | |
| 0 | 1250 | 0:100 | 89 | |
| 0 | 2500 | 0:100 | 94 | |
| 2.5 | 2500 | 1:1000 | 94 | 1.22 |
| 5 | 2500 | 1:500 | 93 | 1.30 |
| 10 | 2500 | 1:250 | 94 | 1.30 |
| 20 | 2500 | 1:125 | 96 | 1.30 |
| 40 | 2500 | 1:62.5 | 98 | 1.41 |
| 80 | 2500 | 1:31.3 | 98 | 1.76 |
| 2.5 | 1250 | 1:500 | 86 | 0.88* |
| 5 | 1250 | 1:250 | 88 | 0.83* |
| 10 | 1250 | 1:125 | 87 | 0.94* |
| 20 | 1250 | 1:62.5 | 95 | 0.79* |
| 40 | 1250 | 1:31.3 | 97 | 0.91* |
| 80 | 1250 | 1:15.6 | 98 | 1.27 |
| 2.5 | 625 | 1:250 | 60 | 1.28 |
| 5 | 625 | 1:125 | 61 | 1.32 |
| 10 | 625 | 1:62.5 | 67 | 1.18 |
| 20 | 625 | 1:31.3 | 88 | 0.66* |
| 40 | 625 | 1:15.6 | 96 | 0.69* |
| 80 | 625 | 1:7.8 | 98 | 1.01 |

7

## TABLE II Cont'd
### DGH and Glutaraldehyde (GLUT)

| ppm DGH[1] | ppm GLUT[2] | Ratio DGH:GLUT | % I | SI |
|---|---|---|---|---|
| 2.5 | 313 | 1:125 | 38 | 1.61 |
| 5 | 313 | 1:62.5 | 43 | 1.51 |
| 10 | 313 | 1:31.3 | 49 | 1.44 |
| 20 | 313 | 1:15.6 | 70 | 0.88* |
| 40 | 313 | 1:7.8 | 94 | 0.59* |
| 80 | 313 | 1:3.9 | 98 | 0.87* |
| 2.5 | 78 | 1:31.3 | 16 | 1.23 |
| 5 | 78 | 1:15.6 | 24 | 1.17 |
| 10 | 78 | 1:7.8 | 39 | 1.00 |
| 20 | 78 | 1:3.9 | 45 | 1.36 |
| 40 | 78 | 1:1.9 | 89 | 0.55* |
| 80 | 78 | 1:0.95 | 99 | 0.77* |
| 2.5 | 39 | 1:15.6 | 8 | 1.10 |
| 5 | 39 | 1:7.8 | 12 | 1.35 |
| 10 | 39 | 1:3.9 | 30 | 1.16 |
| 20 | 39 | 1:1.9 | 45 | 1.21 |
| 40 | 39 | 1:0.95 | 89 | 0.53* |
| 80 | 39 | 1:0.48 | 99 | 0.76* |

[1] product containing 35% actives DGH
[2] product containing 25% actives GLUT

Asterisks in the SI column indicate synergistic combinations in accordance with the Kull method supra.

In the preceding tables, for all combinations tested, differences seen between the replicates are due to normal experimental variance.

In accordance with the preceding tables, unexpected results occurred more frequently within the following product ratios:

| | From about |
|---|---|
| Glutaraldehyde to DGH | 500:1 to 1:1 |

The individual products contain the following amounts of active biocidal components:

| | |
|---|---|
| Glutaraldehyde: | About 25% |
| DGH: | About 35% |

Therefore, when based on the active biocidal component, unexpected results appear more frequently within the following ranges of active components:

| | From about |
|---|---|
| Glutaraldehyde to DGH | 357:1 to 1:2.87 |

At present, it is most preferred that commercial products embodying the invention comprise weight ratios of active components of about:
5:1 Glutaraldehyde: DGH

**Claims**

1. A bacterial inhibiting composition which comprises a synergistic mixture of (a) glutaraldehyde and (b) at least one additional biocidal component, said at least one additional biocidal component being dodecylguanidine hydrochloride and the weight ratio of glutaraldehyde to dodecylguanidine hydrochloride being from about 357:1 to 1:2.87.

2. A method for controlling the growth of bacteria in an aqueous system which comprises adding to the system from about 0.1 to 200 parts by weight of a composition per one million parts by weight of the aqueous system, the composition being as defined in claim 1.

3. A method according to claim 2, wherein the bacteria are <u>Klebsiella</u> <u>pneumoniae</u> bacteria.

4. A method according to claim 2 or 3, wherein the composition is added to the system in an amount, by weight of from about 5 to about 50 parts per million of the aqueous system.

5. A method according to any of claims 2 to 4, wherein the aqueous system comprises a cooling water system.

6. A method according to any of claims 2 to 5, wherein the aqueous system comprises a pulping and papermaking system.

**Patentansprüche**

1. Eine bakterienhemmende Zusammensetzung, welche ein synergistisches Gemisch aus (a) Glutaraldehyd und (b) wenigstens einem zusätzlichen bioziden Bestandteil umfaßt, wobei der zusätzliche biozide Bestandteil Dodecylguanidinhydrochlorid ist, und das Gewichtsverhältnis von Glutaraldehyd zu Dodecylguanidinhydrochlorid von etwa 357:1 bis 1:2,87 beträgt.

2. Ein Verfahren zur Bekämpfung des Bakterienwachstums in einem wäßrigen System, welches die Zugabe von etwa 0,1 bis 200 Gewichtsteile einer Zusammensetzung pro einer Million Gewichtsteile des wäßrigen Systemes zu dem System umfaßt, wobei die Zusammensetzung die in Anspruch 1 angegebene Bedeutung besitzt.

3. Verfahren nach Anspruch 2, worin die Bakterien Klebsiella pneumoniae-Bakterien sind.

4. Verfahren nach Anspruch 2 oder 3, worin die Zusammensetzung dem System in einer Gewichtsmenge von etwa 5 bis etwa 50 ppm des wäßrigen Systemes zugegeben wird.

5. Verfahren nach einem der Ansprüche 2 bis 4, worin das wäßrige System ein Kühlwassersystem umfaßt.

6. Verfahren nach einem der Ansprüche 2 bis 5, worin das wäßrige System ein Holzaufschluß- und Papierherstellungssystem umfaßt.

**Revendications**

1. Composition inhibitrice de bactéries qui comprend un mélange synergétique (a) de glutaraldéhyde, (b) d'au moins un composant biocide additionnel, ledit "au moins un composant biocide additionnel" étant le chlorhydrate de dodécylguanidine, et le ratio pondéral du glutaraldéhyde par rapport au chlorhydrate de dodécylguanidine étant compris entre 357/1 et 1/2,87.

2. Méthode pour le contrôle de la croissance des bactéries dans un système aqueux, qui comprend l'addition au système, d'environ 0,1 à 200 parties en poids d'une composition, pour un million de parties en poids, de système aqueux, la composition étant telle que définie dans la revendication 1.

3. Méthode selon la revendication 2, dans laquelle les bactéries sont des bactéries <u>Klebsiella pneumoniae</u>.

9

4. Méthode selon la revendication 2 ou la revendication 3, dans laquelle la composition est additionnée au système, en quantité pondérale comprise entre environ 5 et environ 50 parties par million de parties de système aqueux.

5. Méthode selon l'une quelconque des revendications 2 à 4, dans laquelle le système aqueux comprend un système aqueux de refroidissement.

6. Méthode selon l'une quelconque des revendications 2 à 5, dans laquelle le système aqueux comprend un système de pulpage et de fabrication de papier.